# EUROPÄISCHE PATENTSCHRIFT

(11) **EP 2 655 899 B1**
(45) Veröffentlichungstag und Bekanntmachung des Hinweises auf die Patenterteilung: **15.03.2017**
(21) Anmeldenummer: 11790983.8
(22) Anmeldetag: 06.12.2011
(51) Int. Cl.: F16B 11/00, F16B 47/00

(54) **BEFESTIGER**
FASTENER
DISPOSITIF DE FIXATION

(30) Priorität: 24.12.2010 DE 102010056221
(43) Veröffentlichungstag der Anmeldung: 30.10.2013
(73) Patentinhaber: Glabete GmbH, 73061 Ebersbach/Fils (DE)
(72) Erfinder: ORTWEIN, Friederike, 73061 Ebersbach (DE)
(74) Vertreter: Ruckh, Rainer Gerhard
(86) Internationale Anmeldenummer: PCT/EP2011/071826
(87) Internationale Veröffentlichungsnummer: WO 2012/084476

(56) Entgegenhaltungen:
- DE-U1-202009 003 176

## Beschreibung

Die Erfindung betrifft einen Befestiger gemäß dem Oberbegriff des Anspruchs 1.

Ein derartiger Befestiger in Form eines Befestigungsmittels ist aus der DE 20 2009 003 176 A bekannt.

Dieses Befestigungsmittel dient zur Fixierung zweier Gegenstände und umfasst einen einkomponentigen aeroben Klebstoff, welchem dosiert Feuchtigkeit zuführbar ist, bevor mit diesem die Gegenstände fixiert sind, so dass der mit Feuchtigkeit versetzte Klebstoff bei aneinander geklebten Gegenständen aushärten kann. Die Grenzflächen der Gegenstände, die mit dem Klebstoff verbunden sind, können diffusionsdicht sein.

Aus der WO 03/036106 ist ein Montagesystem bekannt, welches zur ortsfesten Anbringung von Gegenständen, wie Handtuchhaltern, Regalen, Leuchten oder dergleichen Ausstattungsartikel an einer Wand, Decke oder dergleichen Fläche, insbesondere in mit Kacheln, Marmorplatten oder mit dergleichen Wandverkleidungen ausgestatteten Räumen dient. Das Montagesystem besteht aus verschiedenartigen Befestigern und einem Haft- und Verbindungsmittel, welches von einem aeroben Klebstoff gebildet sein kann, wobei die Befestiger je nach Einsatzzweck in ihrer Form anzupassen sind. Nachteilig bei derartigen Systemen sind sehr lange Aushärtezeiten des Klebstoffs, die bis zu zwölf Stunden betragen können, wodurch die Montagefreundlichkeit der Systeme stark beeinträchtigt ist. In Fällen von kalten, trockenen Umgebungsatmosphären kann das Aushärten besonders stark beeinträchtigt sein.

Der Befestiger dient zur Aufnahme eines Elements zur Halterung des Gegenstands und weist einen Grundkörper auf, der an seiner zur Wand zeigenden Rückseite eine Ausnehmung und eine in letztere einmündende Einfüllöffnung besitzt, über welche das Haft- beziehungsweise Verbindungsmittel zwischen dem Befestiger und der Wand eingebracht wird.

Die der Wand zugewandte Rückseite des Grundkörpers ist wenigstens in Teilbereichen derart flüssigkeits- und gasdurchlässig, so dass das beim Aushärten des in der Ausnehmung befindlichen Haft- und Verbindungsmittels entstehende Gas entweichen beziehungsweise flüchtende Bindemittel ausdunsten kann und zugleich Umgebungsluft an dieses Haft- und Verbindungsmittel gelangt, wodurch dieses aushärten kann und so für eine stabile und belastbare Fixierung des Befestigers an der Wand sorgt.

Nachteilig hierbei ist jedoch, dass das Haft- und Verbindungsmittel stets über die gas- und flüssigkeitsdurchlässige Wand des Grundkörpers in Kontakt mit der Umgebungsluft stehen muss, um ein ausreichendes Aushärten zu gewährleisten. Dies schränkt jedoch die konstruktiven Gestaltungsmöglichkeiten des Befestigers unerwünscht stark ein.

Aus der WO 2009/156013 A1 ist ein Befestigungsmittel bekannt, das aus einer Mischung aus einem aeroben Klebstoff und einem hydrophilen Stoff besteht.

Durch die Zugabe des hydrophilen Stoffes zum aeroben Klebstoff entsteht eine das Befestigungsmittel bildende Mischung, die nicht mehr in Oberflächenkontakt mit feuchter Umgebungsluft gebracht werden muss, um dann von dieser Oberfläche her auszuhärten. Vielmehr sorgt der in der Mischung vorhandene, den aeroben Klebstoff durchsetzende hydrophile Stoff dafür, dass der in der Mischung enthaltene aerobe Klebstoff von innen her auch dann aushärten kann, wenn kein äußerer Kontakt mehr zu der Feuchtigkeit enthaltenden Umgebungsluft gegeben ist. Die zum Aushärten benötigte Feuchtigkeit beziehungsweise der benötigte Sauerstoff ist in dem hydrophilen Stoff selbst vorhanden, da dieser aufgrund seiner hydrophilen Eigenschaften genug Feuchtigkeit enthält, die für das Aushärten des aeroben Klebstoffs in der das Befestigungsmittel bildenden Mischung benötigt wird.

Mit dem so ausgebildeten Befestigungsmittel kann ein Gegenstand auf einer Unterlage einfach dadurch fixiert werden, dass eine Schicht des Befestigungsmittels zwischen den Gegenstand und die Unterlage eingebracht wird.

Für die Anwendung des Befestigungsmittels ist es wesentlich, dass die Komponenten des Befestigungsmittels erst kurz vor Gebrauch zusammengemischt werden.

Hierzu wird ein Montageset bereitgestellt, welches zwei Aufnahmen zur getrennten Lagerung des aeroben Klebstoffs und des hydrophilen Stoffs aufweist. Aus diesen Aufnahmen können dann die Komponenten in gewünschter Menge zur Anmischung des Befestigungsmittels entnommen werden. Das Anmischen erfolgt mittels eines Spatels.

Danach wird eine Schicht des Befestigungsmittels auf den Gegenstand aufgebracht und dieser anschließend auf der Unterlage durch Andrücken der Schicht des Befestigungsmittels an der Unterlage fixiert. In dieser Schicht härtet der aerobe Klebstoff durch in dem hydrophilen Stoff enthaltenen Feuchtigkeit aus.

Der Erfindung liegt die Aufgabe zugrunde, einen Befestiger der eingangs genannten Art auszubilden, welcher bei hoher Funktionalität einfach handhabbar und flexibel einsetzbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Befestiger besteht aus einem Grundkörper und einem gas- und flüssigkeitsundurchlässigen Material, welcher Mittel zur Aufnahme eines Gegenstands aufweist, und welcher mittels eines Klebstoffs auf einer Auflagefläche fixierbar ist. An der der Auflagefläche zugewandten Innenseite des Grundkörpers ist eine hydrophile Einlage aufgebracht, der dosiert Feuchtigkeit zugeführt ist und auf welche ein aerober Klebstoff aufbringbar ist. Dieser ist mit der hydrophilen Einlage in einem von der Auflagefläche und dem Grundkörper umschlossenen Hohlraum gasdicht und flüssigkeitsdicht gekapselt.

Mit dem erfindungsgemäßen Befestiger können Gegenstände an Auflageflächen sicher befestigt werden, ohne dass hierzu konstruktive Eingriffe mit Schrauben oder dergleichen in den Auflageflächen oder Gegenständen vorgenommen werden müssen.

Ein wesentlicher Aspekt der Erfindung besteht in dem Zusammenwirken des aeroben Klebstoffs mit der hydrophilen Einlage im Befestiger. Durch den Kontakt des aeroben Klebstoffs mit der hydrophilen Einlage, welche dosiert Feuchtigkeit enthält, härtet der aerobe Klebstoff in seinem gesamten Volumen aus, ohne dass hierzu ein Kontakt mit der Umgebungsluft notwendig wäre.

Mit diesem mit der hydrophilen Einlage wechselwirkenden aeroben Klebstoff wird eine dauerhafte, zuverlässige und vor allem schnell verfügbare Befestigung von Gegenständen geschaffen und zwar ohne jeglichen Einsatz von Schrauben und ähnlichen mechanischen Befestigungsmitteln.

Ein wesentlicher Vorteil, insbesondere gegenüber dem aus der WO 2009/156013 A1 bekannten Befestigungsmittel, besteht darin, dass kein Vermischen eines aeroben Klebstoffs mit einem hydrophilen Stoff mehr erforderlich ist. Vielmehr reicht allein der mechanische Kontakt des aeroben Klebstoffs zur hydrophilen Einlage, der bei Auftragen des aeroben Klebstoffs auf diese hydrophile Einlage gegeben ist, um bei vollständig gas- und flüssigkeitsdichter Kapselung des aeroben Klebstoffs zwischen Auflagefläche und dem Grundkörper des Befestigers ein vollständiges Aushärten des aeroben Klebstoffs zu gewährleisten. Ein zeitaufwändiges Mischen eines aeroben Klebstoffs mit einem hydrophilen Stoff entfällt somit, wodurch eine hohe Montagefreundlichkeit des Befestigers gegeben ist.

Diese Montagefreundlichkeit wird dadurch erhöht, dass die hydrophile Einlage durch Klebemittel oder eine mechanische Befestigung an der Innenseite des Grundkörpers befestigt ist.

Der Grundkörper und die hydrophile Einlage bilden somit eine Baueinheit, welcher nur noch der aerobe Klebstoff zugeführt werden muss um den Befestiger an der Auflagefläche zu montieren.

Ein weiterer wesentlicher Vorteil der Erfindung besteht darin, dass der aeroben Klebstoff und auch die hydrophile Einlage in dem Hohlraum zwischen der Auflagefläche und dem Grundkörper gas- und flüssigkeitsdicht gekapselt sind. Damit erfolgt der Aushärtungsprozess des aeroben Klebstoffs innerhalb der Kapselung völlig unabhängig von den Umgebungsbedingungen und ist damit in hohem Maße reproduzierbar.

Die hydrophile Einlage würde bei einem Kontakt zur Umgebungsatmosphäre je nach klimatischen Bedingungen gegebenenfalls zuviel oder zuwenig Feuchtigkeit aufnehmen um einen definierten Aushärteprozess des aeroben Klebstoffs zu gewährleisten. Durch die Abschottung des aeroben Klebstoffs von der Umgebungsatmosphäre und die vor Gebrauch des Befestigers erfolgte dosierte Flüssigkeitszufuhr sind derartige Störeinflüsse systematisch beseitigt.

Besonders vorteilhaft wird der hydrophilen Einlage dosiert Feuchtigkeit zugeführt, in dem ein befeuchtetes Tuch über diese geführt wird.Die Zufuhr der Feuchtigkeit kann so sehr einfach durchgeführt und gleichzeitig gut dosiert werden.

In einer besonders vorteilhaften Ausgestaltung der Erfindung ist der aerobe Klebstoff von silanen MS-Polymeren gebildet.

Vorteilhaft ist die hydrophile Einlage in Form eines plattenförmigen Einsatzes bestehend aus Baumwolle oder einen Faserverbundwerkstoff ausgebildet.

Alternativ ist die hydrophile Einlage in Form einer Sinterplatte bestehend insbesondere aus Kunststoff, Edelstahl oder Messing ausgebildet.

Generell kann die hydrophile Einlage auch aus einer hydrophilen Beschichtung, vorzugsweise bestehend aus den vorgenannten Stoffen, gebildet sein, wobei die hydrophile Beschichtung bevorzugt auf einem Einlagekörper aufbracht ist oder direkt im Grundkörper angebracht ist.

Eine vorteilhafte konstruktive Ausbildung des Befestigers sieht vor, dass der Grundkörper ein entlang seines Umfangs umlaufendes Randsegment aufweist, welches erhöht zur Innenseite einer Grundplatte des Grundkörpers, auf welcher die hydrophile Einlage aufliegt, ist.

Die Innenseite des Grundkörpers liegt somit in einer Vertiefung, in welche die hydrophile Einlage eingelegt und dort befestigt werden kann. Vorteilhaft ist die Querschnittsfläche der hydrophilen Einlage an die Fläche der Innenseite angepasst, so dass die hydrophile Einlage im Wesentlichen formschlüssig oder dicht anliegend in der Vertiefung gelagert ist.

Besonders vorteilhaft ist auf das Randsegment als Grundkörper ein Fixierring aufgebracht, mittels dessen der Grundkörper an der Auflagefläche vorfixierbar ist. Insbesondere besteht der Fixierring aus doppelseitigem Klebeband.

Die Vorfixierung des Befestigers erleichtert dessen Montage, da der Befestiger dadurch bereits in seiner Sollposition an der Anlagefläche vorfixiert werden kann, bevor der aerobe Klebstoff auf der hydrophilen Einlage aushärtet. Die Erfindung wird im Folgenden anhand der Zeichnungen erläutert. Es zeigen:
- Figur 1a:: Draufsicht auf die Vorderseite eines ersten Ausführungsbeispiels des erfindungsgemäßen Befestigers.
- Figur 1b:: Draufsicht auf die Rückseite eines ersten Ausführungsbeispiels des erfindungsgemäßen Befestigers.
- Figur 1c:: Schnittdarstellung des Befestigers gemäß den Figuren 1a und 1b.
- Figur 2:: Befestiger mit einer Magnethalterung
- Figur 3:: Anwendungsbeispiel für den Befestiger gemäß Figur 3.

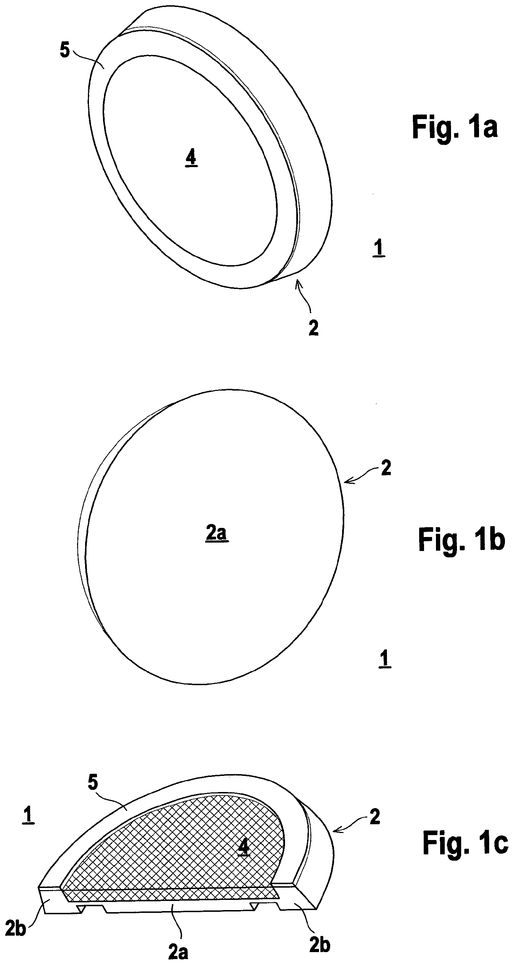

Die Figuren 1a bis 1c zeigen ein erstes Ausführungsbeispiel des erfindungsgemäßen Befestigers 1. Der Befestiger 1 weist einen Grundkörper 2 auf, dessen Vorderseite in Figur 1a und dessen Rückseite in Figur 1b gezeigt ist. Figur 1c zeigt eine Schnittdarstellung des Befestigers 1. Der Grundkörper 2 besteht aus einem massiven, gasundurchlässigen und flüssigkeitsundurchlässigen Material, insbesondere aus einem metallischen Werkstoff wie Aluminium.

Der Grundkörper 2 weist eine Kreisscheibenform auf, wobei die im vorliegenden Fall völlig geschlossen ist. An der Rückseite des Grundkörpers 2 können nicht dargestellte Bolzen, Gewinde und ähnliche Adapter vorgesehen sein, um bestimmte Gegenstände am Befestiger 1 zu lagern und fixieren. Der so ausgebildete Befestiger 1 kann insbesondere zur Halterung von Accessoires in Badezimmern, Sanitärräumen oder auch zur Fixierung von Gegenständen im Innen- und Außenbereich von Gebäuden eingesetzt werden. Beispiele für derartige Gegenstände sind Gitter zur Haltung von Pflanzen, Vorhangschienen, Duschprofile und dergleichen.

Der Grundkörper 2 besteht im vorliegenden Fall aus einer kreisscheibenförmigen Grundplatte 2a, wobei an der Innenseite der Grundplatte ein ringförmiges, in Umfangsrichtung verlaufendes Randsegment 2b vorgesehen ist, welche über die Innenseite der Grundplatte hervorsteht. Die Innenseite der Grundplatte 2a liegt somit vertieft bezüglich des Randsegments 2b.

In dieser Vertiefung ist eine hydrophile Einlage 4 eingelegt und dort fixiert. Die Fixierung kann als mechanische Fixierung oder in Form von Klebemitteln realisiert sein. Die hydrophile Einlage 4 kann in Form eines plattenförmigen.

Einsatzes bestehend aus Baumwolle oder einem Faserverbundwerkstoff bestehen. Alternativ kann die hydrophile Einlage 4 von einer Sinterplatte, die beispielsweise aus Kunststoff, Edelstahl oder Messing besteht, gebildet sein.

Die hydrophile Einlage 4 ist plattenförmig ausgebildet, wobei deren Geometrien an den Grundkörper 2 so angepasst ist, das sich die hydrophile Einlage 4 über die gesamte Fläche der Innenseite der Grundplatte 2a erstreckt und dicht am Randsegment 2b des Grundkörpers 2 anliegt. Alternativ kann sich die hydrophile Einlage 4 über Teilflächen der Grundplatte 2a erstrecken.

Die Materialstärke der hydrophilen Einlage 4 ist so gewählt, dass diese vertieft bezüglich des oberen Rands des Randsegments 2b liegt.

Wie aus den Figuren 1a und 1c ersichtlich, ist auf dem oberen Rand des Randsegments 2b ein Fixierring 5 aufgebracht, der sich über den gesamten Umfang des Randsegments 2b erstreckt. Der Fixierring 5 dient zur Vorfixierung des Befestigers 1 an einer nicht dargestellten Auflagefläche, an welcher der Befestiger 1 montiert werden soll. Vorteilhaft besteht der Fixierring 5 aus einem doppelseitigen Klebeband.

Um den Befestiger 1 dauerhaft an einer Auflagefläche, beispielsweise einer Wand oder Decke eines Gebäudes, zu befestigen, wird zunächst der hydrophilen Einlage 4 dosiert Feuchtigkeit zugeführt, beispielsweise in dem mit einem angefeuchteten Tuch über die hydrophile Einlage 4 gestrichen wird. Auf die so angefeuchtete hydrophile Einlage 4 wird eine Schicht von aerobem Klebstoff aufgetragen. Der aerobe Klebstoff besteht aus einem silanen MS-Polymer. Dann wird der Grundkörper 2 des Befestigers 1 auf die Auflagefläche aufgesetzt, so dass ein Kontakt des Fixierrings 5 mit der Auflagefläche gegeben ist um die gewünschte Vorfixierung zu erhalten. Der aerobe Klebstoff ist dann in einem vollständig geschlossenen, von der Auflagefläche und dem Grundkörper 2 gebildeten Hohlraum angeordnet. Trotz der gas- und luftdichten Kapselung des aeroben Klebstoffs härtet dieser vollständig aus, da dem aeroben Klebstoff über die hydrophile Einlage 4 die benötigte Feuchtigkeit zum Aushärten zugeführt wird. Durch die dosierte Feuchtigkeitszufuhr zur hydrophilen Einlage 4 erhält der aerobe Klebstoff genau die zu einem vollständigen Aushärten benötigte Feuchtigkeitsmenge. Durch die gas- und flüssigkeitsdichte Kapselung ist der aerobe Klebstoff gegen Umwelteinflüsse geschützt, insbesondere gegen schwankende Luftfeuchtigkeiten, die bei Kontakt mit dem aeroben Klebstoff dazu führen können, dass dem aeroben Kunststoff zuviel oder zuwenig Feuchtigkeit zugeführt wird, was eine unvollständige Aushärtung des aeroben Klebstoffs verursachen könnte. Da durch die Kapselung des aeroben Klebstoffs und dessen Kontakt mit der angefeuchteten hydrophilen Einlage 4 ein vollständiges Aushärten des aeroben Klebstoffs erzielt wird, wird ein sehr guter, bleibender Halt des Befestigers 1 an der Auflagefläche erhalten.

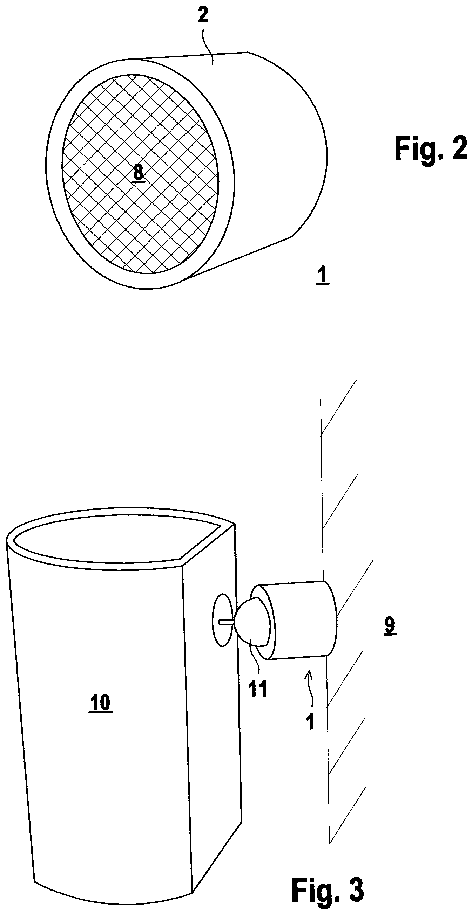

Figur 2 zeigt eine Ausführungsform eines Befestigers 1 mit einer Magnethaltung. Der Befestiger 1 weist im vorliegenden Fall einen hohlzylindrischen Grundkörper 2 auf. Figur 2 zeigt eine Ansicht auf die offene Oberseite des Grundkörpers 2. Innerhalb des Grundkörpers 2 ist ein Magnet 8 gelagert, der vertieft im Grundkörper 2 so liegt, dass dieser über die offene Oberseite des Grundkörpers 2 frei zugänglich ist. An der Unterseite des Grundkörpers 2 befindet sich die hydrophile Einlage 4 gemäß der Ausführungsform der Figuren 1a bis 1c. Durch Aufbringen des aeroben Klebstoffs auf die hydrophile Einlage 4 kann der so ausgebildete Befestiger 1 an einer Auflagefläche montiert werden.

Figur 3 zeigt ein Applikationsbeispiel für den Befestiger 1 gemäß Figur 2. Der Befestiger 1 ist mittels des auf die hydrophile Einlage 4 aufgebrachten aeroben Klebstoffs an einem Wandelement 9, beispielsweise in einem Kraftfahrzeug, befestigt. Ein Müllbehälter 10 weist an seiner Außenwand ein Kugelgelenk auf. Die metallische Kugel 11 des Kugelgelenks ist in die offene Oberseite des Befestigers 1 eingeschoben und dort durch Magnetkräfte am Magnet 8 fixiert. Dadurch ist der Müllbehälter schwenkbar am Befestiger gelagert 1.

### Bezugszeichenliste

- (1): Befestiger
- (2): Grundkörper
- (2a): Grundplatte
- (2b): Randsegment
- (4): hydrophile Einlage
- (5): Fixierring
- (8): Magnet
- (9): Wandelement
- (10): Müllbehälter
- (11): Kugel

## Patentansprüche

1. Befestiger mit einem aus gas- und flüssigkeitsundurchlässigen Material bestehenden Grundkörper (2), welcher Mittel zur Aufnahme eines Gegenstands aufweist, und welcher mittels eines Klebstoffs auf einer Auflagefläche fixierbar ist, wobei ein von der Auflagefläche und dem Grundkörper (2) umschlossener Hohlraum gasdicht und flüssigkeitsdicht gekapselt ist, **dadurch gekennzeichnet, dass** an der der Auflagefläche zugewandten Innenseite des Grundkörpers (2) eine hydrophile Einlage (4) aufgebracht ist, der dosiert Feuchtigkeit zugeführt ist und auf welche ein aerober Klebstoff aufbringbar ist, wobei dieser mit der hydrophilen Einlage (4) in dem Hohlraum gekapselt ist.

2. Befestiger nach Anspruch 1, **dadurch gekennzeichnet, dass** der aerobe Klebstoff von silanen MS-Polymeren gebildet ist.

3. Befestiger nach einem der Ansprüche 1 oder 2, **dadurch gekennzeichnet, dass** die hydrophile Einlage (4) in Form eines plattenförmigen Einsatzes bestehend aus Baumwolle oder einem Faserverbundwerkstoff ausgebildet ist.

4. Befestiger nach einem der Ansprüche 1 oder 2, **dadurch gekennzeichnet, dass** die hydrophile Einlage (4) in Form einer Sinterplatte bestehend insbesondere aus Kunststoff, Edelstahl oder Messing ausgebildet ist.

5. Befestiger nach einem der Ansprüche 1 oder 2, **dadurch gekennzeichnet, dass** die hydrophile Einlage (4) in Form einer hydrophilen Beschichtung auf einem Einlagekörper ausgebildet ist.

6. Befestiger nach einem der Ansprüche 1 bis 5, **dadurch gekennzeichnet, dass** der Grundkörper (2) ein entlang seines Umfangs umlaufendes Randsegment (2b) aufweist, welches erhöht zur Innenseite einer Grundplatte (2a) des Grundkörpers (2), auf welcher die hydrophile Einlage (4) aufliegt, ist.

7. Befestiger nach Anspruch 6, **dadurch gekennzeichnet, dass** auf das Randsegment als Grundkörper (2) ein Fixierring (5) aufgebracht ist, mittels dessen der Grundkörper (2) an der Auflagefläche vorfixierbar ist.

8. Befestiger nach Anspruch 7, **dadurch gekennzeichnet, dass** der Fixierring (5) aus doppelseitigem Klebeband besteht.

9. Befestiger nach einem der Ansprüche 1 bis 8, **dadurch gekennzeichnet, dass** die hydrophile Einlage (4) durch Klebemittel oder eine mechanische Befestigung an der Innenseite des Grundkörpers (2) befestigt ist.

10. Befestiger nach einem der Ansprüche 1 bis 9, **dadurch gekennzeichnet, dass** dieser als Adapter für ein Drehgelenk einen Magnetsockel aufweist.

## Claims

1. Fastener with a base body (2), which consists of material impermeable to gas and liquid and which comprises means for mounting an article and is fixable by way of an adhesive to a support surface, wherein a cavity enclosed by the support surface and the base body (2) is gas-tightly and liquid-tightly encapsulated, **characterised in that** a hydrophilic inlay (4), to which metered moisture is fed and to which an aerobic adhesive can be applied, is mounted on the inner side of the base body (2) facing the support surface, wherein this adhesive together with the hydrophilic inlay (4) is encapsulated in the cavity.

2. Fastener according to claim 1, **characterised in that** the aerobic adhesive is formed by silane MS polymers.

3. Fastener according to one of claims 1 and 2, **characterised in that** the hydrophilic inlay (4) is constructed in the form of a plate-shaped insert consisting of cotton or of a fibre composite.

4. Fastener according to one of claims 1 and 2, **characterised in that** the hydrophilic inlay (4) is constructed in the form of a sintered plate consisting of, in particular, plastics material, stainless steel or brass.

5. Fastener according to one of claims 1 and 2, **characterised in that** the hydrophilic inlay (4) is constructed in the form of a hydrophilic coating on an inlay body.

6. Fastener according to any one of claims 1 to 5, **characterised in that** the base body (2) comprises an edge segment (2b) which runs around along the circumference thereof and which is elevated relative to the inner side, on which the hydrophilic inlay (4) rests, of a base plate (2a) of the base body (2).

7. Fastener according to claim 6, **characterised in that** a fixing ring (5) by means of which the base body (2) is pre-fixable to the support surface is mounted on the edge segment as base body (2).

8. Fastener according to claim 7, **characterised in that** the fixing ring (5) consists of double-sided adhesive strip.

9. Fastener according to any one of claims 1 to 8, **characterised in that** the hydrophilic inlay (4) is fastened by adhesive or a mechanical fastening means to the inner side of the base body (2).

10. Fastener according to any one of claims 1 to 9, **characterised in that** this comprises a magnetic socket as an adapter for a rotary joint.

## Revendications

1. Elément de fixation muni d'un corps de base (2) constitué d'un matériau imperméable aux gaz et aux liquides, qui comporte des moyens conçus pour recevoir un objet et peut être bloqué à demeure sur une surface d'appui, au moyen d'un adhésif, sachant qu'une cavité, ceinturée par ladite surface d'appui et par ledit corps de base (2), est encapsulée avec étanchéité aux gaz et étanchéité aux liquides, **caractérisé par le fait qu'**une garniture intégrée hydrophile (4) est appliquée sur la face intérieure du corps de base (2) tournée vers la surface d'appui, garniture à laquelle de l'humidité est délivrée de manière dosée, et sur laquelle peut être déposé un adhésif aérobie, ce dernier étant encapsulé dans la cavité avec ladite garniture intégrée hydrophile (4).

2. Elément de fixation selon la revendication 1, **caractérisé par le fait que** l'adhésif aérobie consiste en des polymères modifiés silane.

3. Elément de fixation selon l'une des revendications 1 ou 2, **caractérisé par le fait que** la garniture intégrée hydrophile (4) est réalisée en tant que pièce intégrée en forme de plaque, consistant en du coton ou en un matériau composite fibreux.

4. Elément de fixation selon l'une des revendications 1 ou 2, **caractérisé par le fait que** la garniture intégrée hydrophile (4) est réalisée sous la forme d'une plaque frittée consistant notamment en une matière plastique, en de l'acier fin ou en du laiton.

5. Elément de fixation selon l'une des revendications 1 ou 2, **caractérisé par le fait que** la garniture intégrée hydrophile (4) est réalisée sous la forme d'un revêtement hydrophile disposé sur un corps d'intégration.

6. Elément de fixation selon l'une des revendications 1 à 5, **caractérisé par le fait que** le corps de base (2) présente un segment marginal (2b) qui s'étend périphériquement le long de son pourtour et occupe une position rehaussée par rapport à la face intérieure d'une plaque d'assise (2a) dudit corps de base (2), sur laquelle la garniture intégrée hydrophile (4) repose.

7. Elément de fixation selon la revendication 6, **caractérisé par le fait qu'**une bague (5) de consignation à demeure, au moyen de laquelle le corps de base (2) peut être assujetti préalablement à la surface d'appui, est mise en place sur le segment marginal matérialisant un corps de base (2).

8. Elément de fixation selon la revendication 7, **caractérisé par le fait que** la bague (5) de consignation à demeure est constituée d'un ruban adhésif biface.

9. Elément de fixation selon l'une des revendications 1 à 8, **caractérisé par le fait que** la garniture intégrée hydrophile (4) est fixée à la face intérieure du corps de base (2) par des moyens adhésifs, ou par une fixation mécanique.

10. Elément de fixation selon l'une des revendications 1 à 9, **caractérisé par le fait que** ledit élément est pourvu d'une embase magnétique, en tant qu'adaptateur dédié à une articulation tournante.
